# EUROPÄISCHE PATENTSCHRIFT

(11) **EP 1 847 447 B1**
(45) Veröffentlichungstag und Bekanntmachung des Hinweises auf die Patenterteilung: **24.12.2008**
(21) Anmeldenummer: 07007859.7
(22) Anmeldetag: 18.04.2007
(51) Int. Cl.: B62D 33/02

(54) **Runge für die Ladeöffnung eines Fahrzeugaufbaus**
Posts for the loading aperture of a vehicle superstructure
Ranche pour l'ouverture de chargement d'une construction automobile

(30) Priorität: 21.04.2006 DE 102006018608
(43) Veröffentlichungstag der Anmeldung: 24.10.2007
(73) Patentinhaber: F. HESTERBERG & SÖHNE GmbH & Co. KG, 58256 Ennepetal (DE)
(72) Erfinder: Breme, Stefan, Dipl.-Ing., 58339 Breckerfeld (DE); Feinbier, Joachim, Dipl.-Ing., 58256 Ennepetal (DE); Tiedtke, Henning, 58256 Ennepetal (DE); Klein, Claus-Jürgen, 58332 Schwelm (DE)
(74) Vertreter: Christophersen, Ulrich Rudolf

(56) Entgegenhaltungen:
- DE-A1- 10 228 982

## Beschreibung

Die Erfindung betrifft eine Runge für die Ladeöffnung eines Fahrzeugaufbaus, mit einer Kniehebelanordnung zum Verriegeln der Runge an einem fahrzeugfesten Rungenhalter, wobei sich die Kniehebelanordnung zusammensetzt aus einem ersten Hebelarm zwischen dem Rungenhalter und einem Kniehebelgelenk, und einem zweiten Hebelarm zwischen dem Kniehebelgelenk und der Runge, sowie mit einem den einen Hebelarm über das Kniehebelgelenk hinaus verlängernden und an seinem Ende mit einem Handgriff versehenen Betätigungsarm.

Eine Runge mit diesen Merkmalen ist aus der gattungsbildenden EP 1 517 824 B1 bekannt. Der mit einem Handgriff versehene Betätigungsarm, welcher einen der beiden Hebelarme der zum Befestigen der Runge dienenden Kniehebelanordnung über das Kniehebelgelenk hinaus verlängert, erstreckt sich relativ weit nach oben. Berücksichtigt man, dass bei Lastkraftwagen und Lkw-Anhängern die Ladefläche und damit das untere Ende der Rungen bereits in einer Höhe von fast 1,30 m über dem Boden angeordnet ist, so befindet sich die Kniehebelanordnung mit dem Betätigungsarm noch deutlich höher. Der Betätigungsarm ist in dieser Höhe zwar noch greifbar, jedoch lassen sich in solcher Höhe naturgemäß keine größeren horizontalen Zugkräfte mehr aufbringen. Diese sind jedoch erforderlich, um den Kniehebel der Runge aus seiner überstreckten Stellung zu lösen, und so die Runge zu entriegeln. Die Bedingung, in relativ großer Höhe horizontale Zugkräfte aufbringen zu müssen, ist unter ergonomischen Gesichtspunkten nachteilig.

Daher soll eine Runge für die Ladeöffnung eines Fahrzeugaufbaus geschaffen werden, die sich für den Körper weniger belastend, d.h. ergonomischer, entriegeln lässt.

Die **Lösung** dieser Aufgabe ist bei einer Runge der eingangs genannten Art gekennzeichnet durch
- eine schwenkbare Lagerung des Betätigungsarms an dem Hebelarm, deren Schwenkachse sich parallel zu der Achse des Kniehebelgelenks erstreckt,
- einen Schwenkwegbegrenzer zur Begrenzung der Schwenkbarkeit des Betätigungsarms relativ zu dem Hebelarm.

Erreicht wird auf diese Weise eine für den Benutzer verbesserte Handhabung während des Lösens der Runge. Durch die schwenkbare Lagerung des Betätigungsarms an einem der beiden Hebelarme lässt sich der Betätigungsarm zunächst in eine nach außen angewinkelte Zwischenstellung überführen. Bis in diese Stellung sind keine größeren Kräfte erforderlich, da die Übertotpunktsicherung (Überstreckung) der Kniehebelanordnung noch nicht überwunden werden muss. Erst aus dieser angewinkelten Zwischenstellung des Betätigungsarms heraus müssen sodann zur Entsperrung der Kniehebelanordnung größere Zugkräfte aufgewandt werden. Diese sind jedoch nicht mehr ausschließlich horizontal, sondern mit vertikaler Kraftkomponente und damit günstiger für die menschliche Ergonomie.

Gemäß einer bevorzugten Ausgestaltung der Runge ist der Betätigungsarm ein Profil, dessen Querschnitt sich aus einer Basis und mindestens einem von der Basis zu der Runge hin sich erstreckenden Schenkel zusammensetzt, wobei die Basis den Hebelarm zumindest teilweise nach außen hin abdeckt.

Mit dem Ziel einer zusätzlichen Sicherung der Runge gegen ein ungewolltes Entspannen bei starken äußeren Kräften wird vorgeschlagen, dass der Betätigungsarm mit Formschlusselementen versehen ist, die durch Verschwenken des Betätigungsarms gegenüber der Runge verriegeln.

Die durch den Schwenkwegbegrenzer definierte Schwenkbarkeit des Betätigungsarms ist vorzugsweise gleich oder größer als der zwischen der Verriegelung und der Entriegelung der Formschlusselemente zurückzulegende Verschwenkweg des Betätigungsarms. Vorteilhaft hieran ist, dass die dem Ausstellen des Betätigungsarms entgegenwirkenden Kräfte nicht gleichzeitig auftreten, sondern aufeinander folgend. Auf dem Verschwenkweg bis zur vorläufigen Ausstellung des Betätigungsarms in seine Zwischenstellung müssen lediglich die mit der Entriegelung der Formschlusselemente verbundenen Kräfte aufgebracht werden. Erst anschließend erfolgt das weitere Verschwenken des Betätigungsarms unter Entsperrung der Kniehebelanordnung.

Weitere Vorteile und Einzelheiten werden nachfolgend anhand der zugehörigen Zeichnungen erläutert. Darin zeigen:
- Figur 1: ein Fahrzeug mit einem Fahrzeugaufbau, dessen seitliche Ladeöffnung durch
- Figur 2: vertikale Rungen unterteilt ist; eine der vertikalen Rungen in einer Ansicht von außen, wobei nur der untere Teil
- Figur 3: der Runge dargestellt ist; die Runge nach Figur 2 in einer um 90° gedrehten Ansicht, wobei die Runge in
- Figur 4: verriegelter bzw. gesperrter Stellung dargestellt ist; die Runge nach Figur 3 in teilweise entriegelter Stellung;
- Figur 5: den unteren Teil der Figur 3 in vergrößerter Darstellung;
- Figur 6: den unteren Teil der Fig. 4 in vergrößerter Darstellung und
- Figur 7: eine zweite Ausführungsform der Runge in teilweise entriegelter Stellung.

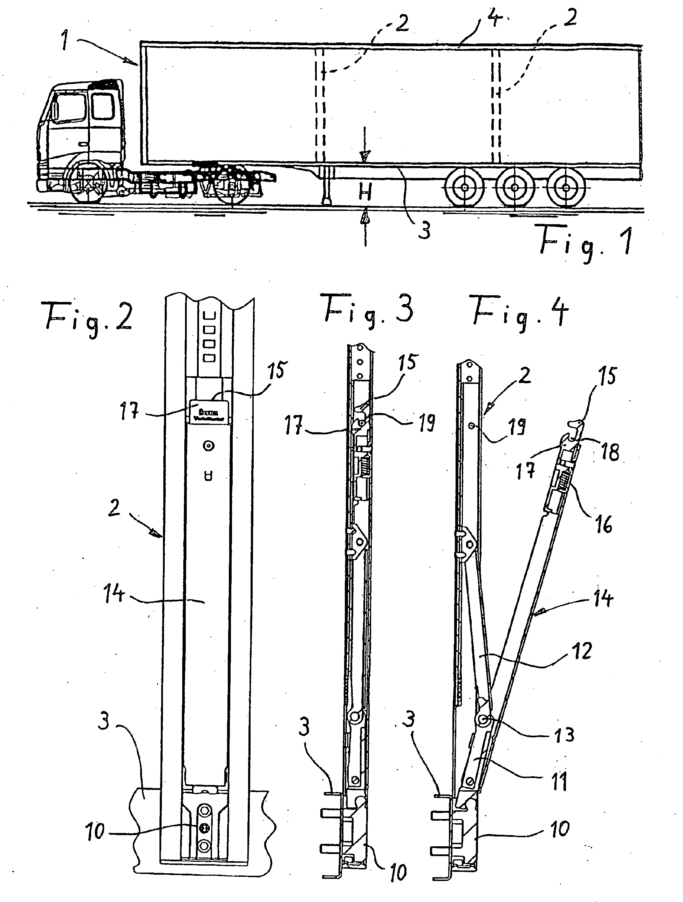

Figur 1 zeigt ein Lastkraftfahrzeug mit einem kastenförmigen Ladeaufbau 1. Innerhalb der seitlichen Ladeöffnung befinden sich zwei oder mehrere vertikale Rungen 2. Die Rungen 2 sind am Ladeboden 3 des Fahrzeugaufbaus verriegelbar, und sie lassen sich nach ihrer Entriegelung in Fahrzeuglängsrichtung verschieben, um so die zwischen ihnen befindliche Öffnung zusätzlich zu vergrößern.

Figur 2 zeigt den unteren Längsbereich einer dieser Rungen 2 einschließlich ihrer Befestigung durch Verriegelung an der Außenseite des Ladebodens 3.

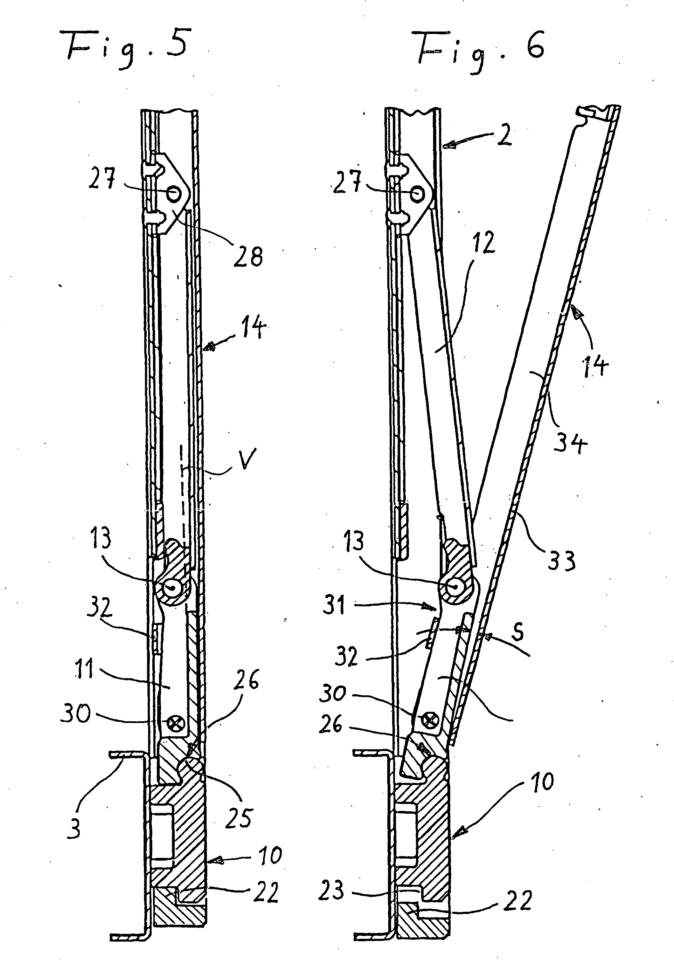

Die Figuren 3 und 4 zeigen den unteren Längsabschnitt der Runge in einer Schnittansicht. Die Figuren 5 und 6 geben dieselben Gegenstände wie die Figuren 3 und 4 wieder, jedoch in vergrößertem Maßstab. In den Figuren 3 und 5 ist die Runge 2 verriegelt dargestellt, wohingegen die Figuren 4 und 6 die Runge in teilweise entriegeltem Zustand wiedergeben.

Jede Runge 2 ist an ihrem oberen, auf der Zeichnung nicht dargestellten Ende in einer Schiene 4 des Fahrzeugaufbaus 1 geführt, so dass sie sich in entriegeltem Zustand in dieser Schiene 4 hängend in Fahrzeuglängsrichtung verschieben lässt. Die Befestigung des unteren Endes der Runge 2 erfolgt an einem Rungenhalter 10, welcher gegen den Ladeboden 3 verschraubt ist. Zur Verriegelung des unteren Endes der Runge 2 an dem Rungenhalter 10 dient eine Kniehebelanordnung. Diese setzt sich zusammen aus einem ersten Hebelarm 11 zwischen dem Rungenhalter 10 und einem Kniehebelgelenk 13, und einem zweiten Hebelarm 12 zwischen dem Kniehebelgelenk 13 und der Runge 2. Des Weiteren vorhanden ist ein den Hebelarm 11 über das Kniehebelgelenk 13 hinaus verlängernder Betätigungsarm 14. Wenngleich sich der Betätigungsarm 14 im Wesentlichen in Verlängerung des ersten Hebelarms 11 nach oben hin erstreckt, so ist er mit dem ersten Hebelarm 11 nur mit gewissen Einschränkungen gekoppelt, worauf später noch näher einzugehen sein wird.

An seinem nach oben ragenden, freien Ende ist der Betätigungsarm 14 mit einem Handgriff 15 versehen. In der Praxis befindet sich dieser Handgriff 15, bedenkt man allein die Höhe H des Ladebodens 3 über dem Untergrund, in einer beträchtlichen Höhe. Dort ist der Handgriff 15 zwar noch ergreifbar, jedoch fällt es in solcher Höhe naturgemäß schwer, größere horizontale Zugkräfte über den Handgriff 15 auf den Betätigungsarm 14 auszuüben.

Der Handgriff 15 befindet sich an einem Element 17 des Betätigungsarms, welches gegenüber dem übrigen Betätigungsarm 14 federnd gelagert ist. Hierbei lässt sich das Element 17 entgegen der Kraft der Feder 16 in Längsrichtung des Betätigungsarms 14, d.h. nach unten, bewegen. An seiner Rückseite ist das Element 17 mit einer Hinterschneidung 18 versehen. Die Hinterschneidung 18 ist hinter einem Bolzen 19 verriegelbar, welcher in dem starren Teil der Runge 2 sitzt. Wird daher das Element 17 entgegen der Kraft der Feder 16 nach unten bewegt, so lässt sich das Element 17 an dem lang gestreckten Teil der Runge 2 verriegeln, indem der Bolzen 19 in der Hinterschneidung 18 verriegelt. Diese verriegelte Stellung des Betätigungsarms 14 ist in Figur 3 dargestellt, wohingegen Figur 4 den entriegelten und zudem leicht gegenüber der Runge angestellten Betätigungsarm 14 zeigt. Die Verriegelung des Betätigungsrahmens 14 über den aus Hinterschneidung 18 und Bolzen 19 gebildeten Formschluss stellt eine zusätzliche Sicherungsmaßnahme dar, da prinzipiell bereits die Gestaltung und Auslegung der Kniehebelanordnung ein ungewolltes Öffnen der Runge verhindert. Die formschlüssige Festlegung des Betätigungsarms 14 vermindert daher zusätzlich das Risiko eines Freigebens der Runge 2, etwa bei starken Bewegungen des Fahrzeugaufbaus 1, oder bei über das normale Maß hinaus gehenden seitlichen Belastungen auf die Runge 2.

Die Figuren 5 und 6 lassen aufgrund ihres größeren Maßstabes Details der Verriegelung der Runge an dem festen Rungenhalter 10 erkennen. Am unteren Ende der lang gestreckten Runge 2 befindet sich daran ein Formschlusselement 22. Dieses legt sich, wenn die Runge 2 angehoben wird, von unten gegen eine entsprechende Formschlusskontur 23 des Rungenhalters 10, wodurch die Runge in diesem angehobenen Zustand formschlüssig an dem Rungenhalter 10 verriegelt. Das hierfür erforderliche Anheben der Runge 2 erfolgt mittels der bereits beschriebenen Kniehebelanordnung 11, 12, 13. Deren erster Hebelarm 11 ist unten mit einer Lagerschale 25 versehen. Über die Lagerschale 25 stützt sich der Hebelarm 11 auf einer korrespondierenden, teilzylindrischen Lagerkontur des Rungenhalters 10 ab. Auf diese Weise bildet die Lagerschale 25 zusammen mit der entsprechenden Lagerkontur ein Gelenk 26 zwischen erstem Hebelarm 11 und Rungenhalter 10. Dieses Gelenk 26 ist trennbar, d.h. die Lagerschale 25 des Hebelarms 11 lässt sich vollständig von der teilzylindrischen Lagerkontur des Rungenhalters 10 lösen, um dann die Runge 2 komplett nach außen über den Rungenhalter 10 hinüber wegschenken zu können. Dies ist erforderlich, damit die gesamte Runge 2 anschließend in Fahrzeuglängsrichtung verschoben werden soll, um für die Beladung des Fahrzeugs eine größere Ladeöffnung zur Verfügung zu haben.

Die beiden Hebelarme 11, 12 stehen über das Kniehebelgelenk 13 in gelenkiger Verbindung. Der obere Hebelarm 12 stützt sich andererseits an einem Gelenkpunkt 27 ab. Dieser befindet sich an einer in der Runge 2 angebrachten Lasche 28. Vorzugsweise ist der zweite Hebelarm 12 länger als der erste Hebelarm 11. Wird in der in Figur 6 dargestellten Ausgangsstellung die Kniehebelanordnung durchgedrückt, d.h. unter Streckung der nach außen angewinkelten Hebelarme 11, 12, führt dies zu einer Verlagerung der Runge 2 nach oben, und damit zu der bereits beschriebenen Verriegelung des Formschlusselements 22 der Runge an der Formschlusskontur 23 des Rungenhalters 10. Die für diese Streckung der Kniehebelanordnung erforderliche Kraft wird über den verlängerten Betätigungsarm 14 aufgebracht.

Im Endzustand, wie er in Figur 5 wiedergegeben ist, ist die Kniehebelanordnung überstreckt. Dabei befindet sich das Kniehebelgelenk 13 des Kniehebels weiter fahrzeugeinwärts, als die Verbindungsgerade V zwischen Gelenk 26 und Gelenkpunkt 27. Zur Erläuterung ist in Figur 5 die Verbindungsgerade V gestrichelt eingezeichnet. Bei der Stellung gemäß Figur 6 hingegen sind die Verhältnisse umgekehrt, d.h. das Kniehebelgelenk 13 befindet sich fahrzeugaußen, bezogen auf die Verbindungsgerade zwischen Gelenk 26 und Gelenkpunkt 27.

Bei überstreckter Kniehebelanordnung gemäß Figur 5 liegt daher eine Übertotpunktsicherung des Kniehebelgelenks 13 vor, unter normalen Umständen kann es zu keinem Lösen der Kniehebelanordnung kommen. Aus demselben Grunde ist eine gewisse Kraft erforderlich, um die Kniehebelanordnung wieder aus der in Figur 5 dargestellten Spreizstellung zu lösen. Diese Kraft muss vom Bediener über den Betätigungsarm 14 aufgebracht werden.

Hierzu hat es sich als günstig herausgestellt, wenn der Betätigungsarm 14 nicht starr zu dem Hebelarm 11 ist, sondern geringfügig schwenkbar daran. Zu diesem Zweck sind Hebelarm 11 und Betätigungsarm 14 an einer Schwenkachse 30 miteinander verbunden, die sich parallel zu der Achse des Kniehebelgelenks 13 erstreckt. Die Schwenkachse 30 befindet sich relativ weit unten an dem ersten Hebelarm 11 in Nähe zu der Lagerschale 25. Die Schwenkachse 30 gestattet zwar eine Verschwenkbarkeit des Betätigungsarms 14 relativ zu dem ersten Hebelarm 11, jedoch ist der mögliche Schwenkweg gering und auf 1° bis 10° begrenzt. Hierzu dient ein Schwenkwegbegrenzer 31. Die Schwenkbewegung des Betätigungsarms 14 nach außen wird durch eine Lasche 32 begrenzt, die an dem Betätigungsarm 14 angebracht ist und sich von innen her gegen den Hebelarm 11 legt, wie dies in Figur 6 dargestellt ist. Die Schwenkbewegung des Betätigungsarms 14 nach fahrzeuginnen hin ist durch eine Basis 33 des aus einem Metallprofil bestehenden Betätigungsarms 14 begrenzt, die sich in diesem Fall von außen gegen den Hebelarm 11 legt. Insoweit ergibt sich der in Figur 6 eingezeichnete maximale Schwenkwinkel S.

Von der flachen Basis 33 des Betätigungsarms 14 erstrecken sich Schenkel 34 in Richtung zu der Runge hin. Durch die Basis 33 wird der dahinter angeordnete Hebelarm 11 zumindest teilweise nach außen hin abgedeckt. Zudem deckt die Basis 33 auch den anderen Hebelarm 12 nach außen ab, so dass, wie insbesondere die Ansicht Figur 2 erkennen lässt, die Kniehebelanordnung von außen her nicht sichtbar ist.

Ausgehend von der Schließstellung nach Figur 5 erfolgt die Entriegelung der Runge 2 in den folgenden Schritten:

Zunächst erfolgt die Entsperrung des gesicherten Betätigungsarms 14., indem das den Handgriff 15 aufweisende Element 17 entgegen der Kraft der Feder 16 nach unten gezogen wird, wodurch der Formschluss zwischen Hinterschneidung 18 und Bolzen 19 gelöst wird. Der hierbei von dem Betätigungsarm 14 zurückgelegte Schwenkwinkel liegt noch innerhalb des Maximalbereiches des Schwenkwegbegrenzers, so dass an dem Betätigungsarm 14 noch keine zusätzlichen Kräfte wirken. Der Betätigungsarm 14 gelangt auf diese Weise in eine gegenüber der Runge 2 angewinkelte Zwischenstellung mit dem Schwenkwinkel S. In dieser Zwischenstellung liegt der Handgriff 15 vollständig frei und ist daher sehr gut greifbar, zudem bewirkt die angewinkelte Stellung des Betätigungsarms, dass weitere von Hand aufgebrachte Zugkräfte bereits eine gewisse vertikale Komponente aufweisen, was ergonomisch günstig ist. Denn bei einem weiteren Zug an dem Betätigungsarm 14 muss die Übertotpunktsicherung der Kniehebelanordnung überwunden werden, wozu Kraftaufwand erforderlich ist. Rein horizontale Zugkräfte sind hierbei nachteilig.

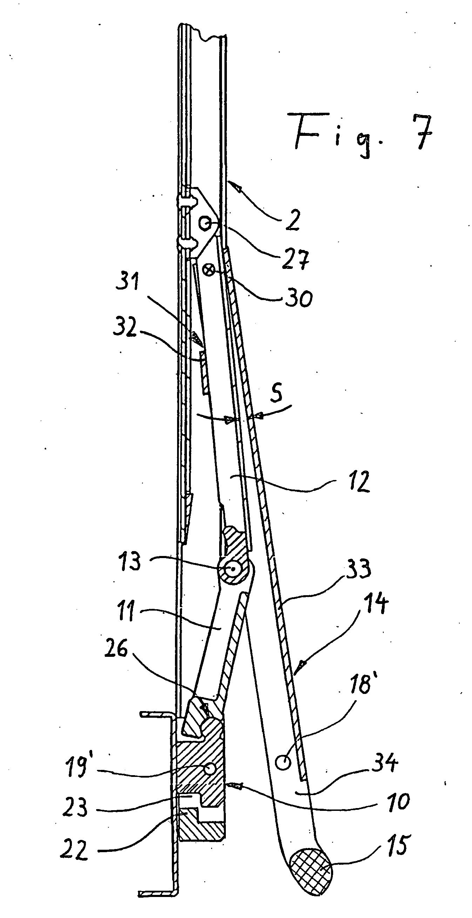

Eine andere Ausführungsform einer erfindungsgemäßen Runge ist in Fig. 7 im Schnitt dargestellt. Im Unterschied zu der bisher beschriebenen ersten Ausführungsform ist der Betätigungsarm 14 mit dem Handgriff 15 nicht an dem unteren Hebelarm 11, sondern an dem oberen Hebelarm 12 angelenkt. Die Anlenkung erfolgt aber wiederum an einer Schwenkachse 30, die sich in diesem Fall relativ weit oben an dem Hebelarm 12 knapp unter dem rungenfesten Gelenkpunkt 27 befindet.

Die Schwenkbegrenzung 31 des Betätigungsarms 14 in Bezug auf den oberen Hebelarm 12 erfolgt wieder einerseits durch die Basis 33 des Betätigungsarms 14, und andererseits durch die an dem Betätigungsarm 14 angeformte Lasche 32.

Auch bei der Ausführungsform nach Fig. 7 ist eine zusätzliche Sicherung des Betätigungsarms 14 vorgesehen. Zu diesem Zweck ist der Betätigungsarm 14 in Höhe des Rungenhalters 10 mit Formschlusselementen 18' versehen ist, die durch Verschwenken des Betätigungsarms 14 an dem Rungenhalter 10 verriegelbar sind. Hierzu sind an dem Rungenhalter 10 korrespondierende, z. B. federnd gestaltete Formschlusselemente 19' angeordnet, in denen die anderen Formschlusselemente 18' verriegeln können.

### Bezugszeichen

- 1: Fahrzeugaufbau
- 2: Runge
- 3: Ladeboden
- 4: Schiene
- 10: Rungenhalter
- 11: Hebelarm
- 12: Hebelarm
- 13: Kniehebelgelenk
- 14: Betätigungsarm
- 15: Handgriff
- 16: Feder
- 17: Element
- 18: Formschlusselement, Hinterschneidung
- 18': Formschlusselement
- 19: Bolzen
- 19': Formschlusselement
- 22: Formschlusselement
- 23: Formschlusskontur
- 25: Lagerschale
- 26: Gelenk
- 27: Gelenkpunkt
- 28: Lasche
- 30: Schwenkachse
- 31 1: Schwenkwegbegrenzer
- 32: Lasche
- 33: Basis
- 34: Schenkel

- H: Höhe
- S: Schwenkwinkel
- V: Verbindungsgerade

## Patentansprüche

1. Runge für die Ladeöffnung eines Fahrzeugaufbaus, mit einer Kniehebelanordnung zum Verriegeln der Runge (2) an einem fahrzeugfesten Rungenhalter (10), wobei sich die Kniehebelanordnung zusammensetzt aus einem ersten Hebelarm (11) zwischen dem Rungenhalter (10) und einem Kniehebelgelenk (13), und einem zweiten Hebelarm (12) zwischen dem Kniehebelgelenk (13) und der Runge (2), sowie mit einem den einen Hebelarm über das Kniehebelgelenk (13) hinaus verlängernden und an seinem Ende mit einem Handgriff (15) versehenen Betätigungsarm (14), **gekennzeichnet durch**
- eine schwenkbare Lagerung des Betätigungsarms (14) an dem Hebelarm, deren Schwenkachse (30) sich parallel zu der Achse des Kniehebelgelenks (13) erstreckt,
- einen Schwenkwegbegrenzer (31) zur Begrenzung der Schwenkbarkeit des Betätigungsarms (14) relativ zu dem Hebelarm.

2. Runge nach Anspruch 1,
**gekennzeichnet durch**
eine Lagerung des Betätigungsarms (14) an jenem Hebelarm (11), welcher sich zwischen dem Rungenhalter (10) und dem Kniehebelgelenk (13) erstreckt.

3. Runge nach Anspruch 1 oder Anspruch 2,
**dadurch gekennzeichnet,**
**dass** der Schwenkwegbegrenzer (31) den Schwenkwinkel (S) des Betätigungsarms (14) relativ zu dem Hebelarm auf 1° bis 10° begrenzt.

4. Runge nach einem der vorangehenden Ansprüche,
**dadurch gekennzeichnet,**
**dass** der Betätigungsarm (14) im Bereich seines dem Handgriff (15) abgewandten Endes an dem Hebelarm gelagert ist.

5. Runge nach einem der vorangehenden Ansprüche,
**dadurch gekennzeichnet,**
**dass** der Betätigungsarm (14) ein Metallprofil ist, dessen Querschnitt sich aus einer Basis (33) und mindestens einem von der Basis (33) zu der Runge (2) hin sich erstreckenden Schenkel (34) zusammensetzt, und dass die Basis (33) den Hebel arm (11) zumindest teilweise nach außen hin abdeckt.

6. Runge nach einem der vorangehenden Ansprüche,
**dadurch gekennzeichnet,**
**dass** der Betätigungsarm (14) mit Formschlusselementen (18) versehen ist, die durch Verschwenken des Betätigungsarmes (14) gegenüber der Runge (2) verriegelbar sind.

7. Runge nach einem der Ansprüche 1 bis 5,
**dadurch gekennzeichnet,**
**dass** der Betätigungsarm (14) mit Formschlusselementen (18') versehen ist, die durch Verschwenken des Betätigungsarms (14) gegenüber dem Rungenhalter (10) verriegelbar sind.

8. Runge nach Anspruch 6 oder Anspruch 7,
**dadurch gekennzeichnet,**
**dass** die durch den Schwenkwegbegrenzer (31) definierte Schwenkbarkeit des Betätigungsarms (14) gleich oder größer ist als der zwischen der Verriegelung und der Entriegelung der Formschlusselemente (18) zurückzulegende Verschwenkweg des Betätigungsarms (14).

## Claims

1. Stanchion for the loading opening of a vehicle superstructure, comprising a knee lever arrangement for locking the stanchion (2) on a stanchion holder (10) fixed to the vehicle, wherein the knee lever arrangement is composed of a first lever arm (11) between the stanchion holder (10) and a knee lever joint (13), and a second lever arm (12) between the knee lever joint (13) and the stanchion (2), and also comprising an actuating arm (14) which extends one lever arm beyond the knee lever joint (13) and is provided with a handle (15) at its end, **characterised by**
- a pivotable mounting of the actuating arm (14) on the lever arm, the pivot axis (30) of which extends parallel to the axis of the knee lever joint (13),
- a pivoting travel limiter (31) for limiting the pivotability of the actuating arm (14) relative to the lever arm.

2. Stanchion according to claim 1, **characterised by** a mounting of the actuating arm (14) on that lever arm (11) which extends between the stanchion holder (10) and the knee lever joint (13).

3. Stanchion according to claim 1 or claim 2, **characterised in that** the pivoting travel limiter (31) limits the angle of pivoting (S) of the actuating arm (14) relative to the lever arm to 1° to 10°.

4. Stanchion according to one of the preceding claims, **characterised in that** the actuating arm (14) is mounted on the lever arm in the region of its end remote from the handle (15).

5. Stanchion according to one of the preceding claims, **characterised in that** the actuating arm (14) is a metal profile, the cross section of which is composed of a base (33) and at least one leg (34) which extends from the base (33) towards the stanchion (2), and **in that** the base (33) conceals the lever arm (11) at least partially towards the outside.

6. Stanchion according to one of the preceding claims, **characterised in that** the actuating arm (14) is provided with form-fitting elements (18) which can be locked by pivoting the actuating arm (14) relative to the stanchion (2).

7. Stanchion according to one of claims 1 to 5, **characterised in that** the actuating arm (14) is provided with form-fitting elements (18') which can be locked by pivoting the actuating arm (14) relative to the stanchion holder (10).

8. Stanchion according to claim 6 or claim 7, **characterised in that** the pivotability of the actuating arm (14) defined by the pivoting travel limiter (31) is equal to or greater than the pivoting travel which has to be carried out by the actuating arm (14) between the locking and the unlocking of the form-fitting elements (18).

## Revendications

1. Rancher pour l'ouverture de chargement d'une carrosserie de véhicule avec un ensemble de levier à genouillère pour le verrouillage du rancher (2) sur une bride de rancher (10) fixée au véhicule, l'ensemble de levier à genouillère se composant d'un premier bras de levier (11) entre la bride de rancher (10) et une articulation à genouillère (13), et un second bras de levier (12) entre l'articulation à genouillère (13) et le rancher (2), ainsi qu'avec un bras d'actionnement (14) pourvu sur son extrémité d'une poignée (15) et prolongeant un bras de levier au-delà de l'articulation à genouillère (13),
**caractérisé par**
- un logement pivotant du bras d'actionnement (14) sur le bras de levier, dont l'axe de pivotement (30) s'étend parallèlement à l'axe de l'articulation à genouillère (13),
- un limiteur de course de pivotement (31) pour limiter l'orientabilité du bras d'actionnement (14) par rapport au bras de levier.

2. Rancher selon la revendication 1,
**caractérisé par**
un logement du bras d'actionnement (14) sur ce bras de levier (11) qui s'étend entre la bride de rancher (10) et l'articulation à genouillère (13).

3. Rancher selon la revendication 1 ou 2,
**caractérisé en ce**
**que** le limiteur de course de pivotement (31) limite l'angle de pivotement (S) du bras d'actionnement (14) par rapport au bras de levier de 1 à 10°.

4. Rancher selon l'une quelconque des revendications précédentes,
**caractérisé en ce**
**que** le bras d'actionnement (14) est logé dans la zone de son extrémité éloignée de la poignée (15) sur le bras de levier.

5. Rancher selon l'une quelconque des revendications précédentes,
**caractérisé en ce**
**que** le bras d'actionnement (14) est un profilé métallique, dont la section transversale se compose d'une base (33) et au moins d'une branche (34) s'étendant de la base (33) au rancher (2), et en ce que la base (33) recouvre le bras de levier (11) au moins partiellement vers l'extérieur.

6. Rancher selon l'une quelconque des revendications précédentes,
**caractérisé en ce**
**que** le bras d'actionnement (14) est pourvu d'éléments qui peuvent être verrouillés par le pivotement du bras d'actionnement (14) par rapport au rancher (2).

7. Rancher selon l'une quelconque des revendications 1 à 5,
**caractérisé en ce**
**que** le bras d'actionnement (14) est pourvu d'éléments (18') qui peuvent être verrouillés par le pivotement du bras d'actionnement (14) par rapport au rancher (2).

8. Rancher selon la revendication 6 ou 7,
**caractérisé en ce**
**que** l'orientabilité du bras d'actionnement (14) définie par le limiteur de course de pivotement (31) est égale ou supérieure à la course de pivotement du bras d'actionnement (14) à parcourir entre le verrouillage et le déverrouillage des éléments (18).
